# EUROPÄISCHE PATENTSCHRIFT

(11) **EP 1 160 536 B1**
(45) Veröffentlichungstag und Bekanntmachung des Hinweises auf die Patenterteilung: **23.11.2005**
(21) Anmeldenummer: 01112346.0
(22) Anmeldetag: 21.05.2001
(51) Int. Cl.: F42C 13/02, G01S 7/486

(54) **Laserradar-Annäherungszünder mit Masken-Diskrimination**
Laser radar proximity fuze with mask discrimination
Fusée de proximité employant un radar à laser avec discrimination de masque

(30) Priorität: 27.05.2000 DE 10026534
(43) Veröffentlichungstag der Anmeldung: 05.12.2001
(73) Patentinhaber: Diehl BGT Defence GmbH & Co.KG, 88662 Überlingen (DE)
(72) Erfinder: Ganghofer, Andreas, 90471 Nürnberg (DE)
(74) Vertreter: Diehl Patentabteilung

(56) Entgegenhaltungen:
- EP-A- 0 314 646
- DE-A- 19 607 345
- GB-A- 2 269 504
- US-A- 4 245 559
- US-A- 4 896 606

## Beschreibung

Die Erfindung betrifft einen Annäherungszünder gemäß dem Oberbegriff des Anspruches 1.

Ein derartiger Annäherungszünder ist aus der DE 42 24 292 C1 als optronische Zündvorrichtung mit Diskrimination zwischen Masken- und Schrägzielen unter Einsatz von Dual-Gate-Pulslaufzeitmeßverfahren bekannt. Bei einem Maskenziel handelt es sich um die mehr oder weniger vollständige Verdeckung des eigentlich interessierenden Zieles etwa durch Buschwerk. Aufgrund von Streuerscheinungen bei der Reflexion des ausgesandten Laserimpulses ist der empfangene Echoimpuls dann signifikant länger als der an einem idealen Ziel reflektierte Sendeimpuls, bei stärker geneigt ansteigender und sehr viel stärker geneigt abfallender Flanke des über der Zeit empfangenen Echoimpulsverlaufes. Eine ähnliche Impulsverlängerung tritt an Stufenzielen wie im Falle von gepanzerten Fahrzeugen und ihren Aufbauten auf. Für eine entsprechende Diskrimination ist es aus der gattungsbildenden Vorveröffentlichung bekannt, im Projektilzünder zwei orthogonal zueinander ausgerichtete, an sich autark arbeitende Laserradareinrichtungen aus jeweils einer Sende- und Empfangsstation zu installieren. Die Zieldiskrimination erfolgt durch Vorgabe von Schwellwerten für das Korrelationsintegral aus den beiden Echosignalverläufen, was erheblichen zusätzlichen Aufwand für die Unterscheidung der beiden Echosignalverläufe voneinander und für deren Korrelationsverarbeitung bedingt.

Das aus der DE 39 15 627 A1 bekannte optische Radar vermeidet ein mechanisches Schwenken der Sendeeinrichtung, indem zur zeilenweisen Szenenabtastung eine Reihe von Empfangselementen, die bestimmten Sendeelementen strahlengeometrisch zugeordnet sind, nacheinander elektronisch abgefragt werden. Nach der Impulslaufzeitmethode werden dann aus den im Zeitmultiplex empfangenen einzelnen Echoimpulsverläufen den herkömmlichen Reflexionsbildern zugeordnete Entfernungsbilder erstellt. Da die Empfangsechos, also die empfangenen Echoimpulsverläufe aufgrund unterschiedlicher Zielentfernungen und Objektreflektivitäten stark variieren, wird im empfangsseitigen Signaldetektor für das Auslösen des Stopp- oder Entfernungstriggers das sog. Constant-Fraction-Trigger-Prinzip realisiert.

Beim aus der DE 196 07 345 A1 bekannten Laserentfernungsmesser wird der Sendeimpuls derart räumlich verschwenkt, daß er auch einen Referenzreflektor erfaßt, dessen Entfernung sehr genau bekannt ist, so daß für die aktuelle Laufzeit-Entfernungsmessung hieraus Korrekturinformationen gewonnen werden können. Dabei wird außer dem Anfang des Echoimpulsverlaufes auch die mit dem Echoimpuls empfangene Ladung oder aber statt dessen die Länge des Echoimpulsverlaufes erfaßt. Zum Bestimmen der Impulslänge wird ermittelt, wann ein von der steilen Anstiegsflanke überschrittenes Referenzpotential von der dagegen sehr viel flacheren Abfallflanke wieder unterschritten wird. Das Meßergebnis ist allerdings eher für die Reflexionsgegebenheiten als für die Reflektorentfernung repräsentant, weil die Neigungen der Anstiegsflanke und der Rückflanke des Echoimpulsverlaufes maßgeblich von der Impulsamplitude und deshalb außer von der Entfernung vor allem sehr stark von den Reflexionseigenschaften des Reflektors abhängen. Dieser Fehlereinfluß wird deshalb rechnerisch mittels des Referenzechos aus exakt vorbekannter Entfernung eliminiert - was natürlich im Laser-Abstandszünder eines ein potentielles Zielobjekt anfliegenden Projektils wegen nicht konstanter Entfernung und aspektabhängig variierenden Reflexionsgegebenheiten nicht realisierbar ist.

In der Praxis begnügt man sich deshalb bisher im Laser-Abstandszünder für die Zielentfernungsmessung mit dem Messen der Impulslaufzeit bis zu dem Zeitpunkt, da die Anstiegsflanke des Echoimpulsverlaufes ein schaltungstechnisch vorgegebenes Referenzpotential überschreitet. Der Meßzeitpunkt hängt deshalb nicht nur von der tatsächlichen Entfernung des reflektierenden Zieles ab, sondern auch von dessen die Echoamplitude maßgeblich beeinflussenden momentanen Reflexionsgegebenheiten, nach der sich die Steilheit des Echoimpulsverlaufes richtet. Das auf die Anstiegsflanke abstellende Kriterium sichert deshalb keinen optimalen Zeitpunkt für die Zündauslösung. Nachteilig bei der Zündauslösung zu Beginn des Echoimpulsverlaufes ist außerdem, daß bei Maskenzielen oder gestuften Echostrukturen die Zündauslösung nicht auf das eigentliche Zielzentrum optimiert ist, sondern auf eine Reflexionsgegebenheit vor dem eigentlichen Zielzentrum, wie im Falle von Buschwerk vor einem Panzerfahrzeug, so daß keine optimale Zielbekämpfung zu erwarten ist.

In Erkenntnis dieses Gegebenheiten liegt vorliegender Erfindung die technische Problemstellung zugrunde, aus dem Projektilflug heraus eine Optimierung der Zündauslösung auch gegen gestufte oder Maskenziele mit Hilfe eines Laserentfernungsmessers zu erreichen.

Gemäß der Merkmalskombination des Hauptanspruches wird diese Aufgabe erfindungsgemäß dadurch gelöst, daß für die Zündauslösung nicht mehr auf den Anfang, sondern auf das Ende des Echoimpulsverlaufes getriggert wird, obgleich dessen vergleichsweise flach abfallende Impulsflanke sich an sich gar nicht für die Bestimmung eines eindeutigen, reproduzierbaren Triggerzeitpunktes eignet. Mit dem als solchen bekannten, bisher stets auf die Anstiegsflanke eines Impulses angewandte Constant-Fraction-Trigger-Prinzip läßt sich aber überraschenderweise auch aus der flachen Rückflanke des Echoimpulsverlaufes ein gut reproduzierbarer entfernungsabhängigen Triggerimpuls für die dahingehend optimierte Zündauslösung ableiten, daß die Zielbekämpfung nicht zu früh einsetzt, sondern besser auf das Zielzentrum gerichtet wird.

Dieses oder auch nur ein vergleichbares Ergebnis wird nicht erreicht, wenn gemäß der optoelektronischen Detektoreinrichtung nach EP 0 314 646 A2 ein Abstands-Zündsignal nur ausgelöst wird, wenn der reflektierte Sendeimpuls früher eintrifft, als ein gesondert generiertes Ausblendsignal. Dieses Ausblendsignal beginnt um die Laufzeit des Zündabstandes verzögert nach dem Sendeimpuls, und jenes zusätzliche Ausblendsignal endet deutlich später, als es der maximalen Entfernungsmessung für die Abstandszündauslösung entspricht. Das Ausblendsignal dient so als Vorgabe eines Entfernungstores. Wenn das Echo des Sendeimpulses, also der Zielreflex, nicht mehr während noch anstehenden Ausblendsignales erscheint, dann fällt eine zuvor gesetzte monostabile Kippstufe ab, und das Zündsignal wird auf die fallende Flanke des abgeschalteten Flipp-Flopp-Ausgangssignales getriggert. Bei dieser Flanke handelt es sich aber nicht um eine Flanke des Echoimpulses oder um eine aus dem Echoimpuls abgeleitete Flanke. Aus dem Triggern auf den Abfall der monostabilen Kippstufe kann deshalb nichts hergeleitet werden für die Optimierung der Bekämpfung eines Zielobjekts im Schutzzustand, also hinter einer Tarnung, weil die abfallende Flanke der Kippstufe rein schaltungstechnisch bedingt ist, aber keinerlei Echoinformation beinhaltet.

Eine zusätzliche Optimierung der Zündauslösung läßt sich erfindungsgemäß erzielen, wenn in Verbindung mit dem Triggern auf die Impulsrückflanke auch die aktuell anzutreffenden Zielreflexionseigenschaften berücksichtigt werden, für die eine Verlängerung des empfangenen Echoimpulses im Vergleich zum gesendeten Laserimpuls charakteristisch ist, etwa in Hinblick die variierenden Empfangsgegebenheiten beim Anflug auf ein durch Einnebelung vollmaskiertes oder durch lokale Tarnung teilmaskiertes Ziel. Für diese zusätzlichen Optimierungsmöglichkeiten des nach dem Trigger einsetzenden Zündauslösealgorithmus, der selbst nicht Gegenstand vorliegender Erfindung als solcher ist, wird gemäß einer Weiterbildung der Erfindung die Impulslänge vor dem aus der Rückflanke abgeleiteten Triggerimpuls gemessen. Um auch dabei die Einflüsse der von der momentanem Echoimpulsamplitude und damit von der Zielannäherung abhängigen Flankensteilheiten als variable Fehlerquellen zu eliminieren, wird das Constant-Fraction-Trigger-Prinzip nun auf beide Flanken des Echoimpulsverlaufes angewandt. Das ist apparativ besonders vorteilhaft mit zwei ausgangsseitig auf ein UND-Gatter zusammengeschalteten Komparatoren realisierbar, die über ein einziges Verzögerungsglied für den empfangenen Echoimpulsverlauf angesteuert werden. Beispielsweise wird das Verzögerungsglied auf den direkten (d.h. auf den nicht-invertierenden) Eingang des einen und den invertierenden Eingang des anderen Komparators geschaltet, bei bedämpfter Aufschaltung des unverzögerten Echoimpulsverlaufes auf den invertierenden Eingang des ersterwähnten Komparators und unbedämpfter Ansteuerung des direkten Eingangs des anderen Komparators. Dadurch wird an den Komparator-Ausgängen für die ansteigende Flanke bzw. für die abfallende Flanke des Echoimpulsverlaufes jeweils ein bipolarer Differenzverlauf erzeugt. Diese beiden Spannungsverläufe schalten das nachfolgende UND-Gatter nur dann und so lange durch, wie beide Verläufe gleichzeitig den logischen Schaltpegel des Gatters (beispielsweise beide positives Signalpotential) führen, so daß sich am Gatterausgang ein Rechteckimpuls von einer für den Echoimpulsverlauf charakteristischen Länge einstellt, da diese nun vom momentanen Spitzenwert des Echoimpulsverlaufes weitestgehend unabhängig ist.

Zur näheren Erläuterung der erfindungsgemäßen Lösung und ihrer Weiterbildungen und Vorteile wird außer auf die weiteren Ansprüche auch auf nachstehende Beschreibung eines vorteilhaften schaltungstechnischen Realisierungsbeispieles verwiesen. In der Zeichnung zeigt:
- Fig. 1: die Komparatorschaltung für das Erfassen von Triggerpunkten auf der relativ steilen Vorderflanke und auf der deutlich flacher verlaufenden Rückflanke des Echoimpulsverlaufes,
- Fig. 2A: ein Beispiel für den ungedämpft verzögerten und den gedämpft unverzögerten Echoimpulsverlauf sowie für die bipolare zeitliche Differenz zwischen diesen beiden Verläufen zum Ermitteln eines vom Spitzenwert unabhängigen Triggerzeitpunktes auf der ansteigenden Impulsflanke,
- Fig. 2B: entsprechen Fig. 2A die Ermittlung eines Triggerzeitpunktes auf der abfallenden Impulsflanke aus einem Vergleich des empfangenen Echoimpulsverlaufes mit dem verzögerten und gedämpften Echoimpulsverlauf,
- Fig. 3A: bis Fig. 3C die Funktion des den Komparatoren aus Fig. 1 nachgeschalteten UND-Gatters in Abhängigkeit von der momentanen Polarität der Differenzverläufe nach Fig. 2A und Fig. 2B am jeweiligen Komparatorausgang.

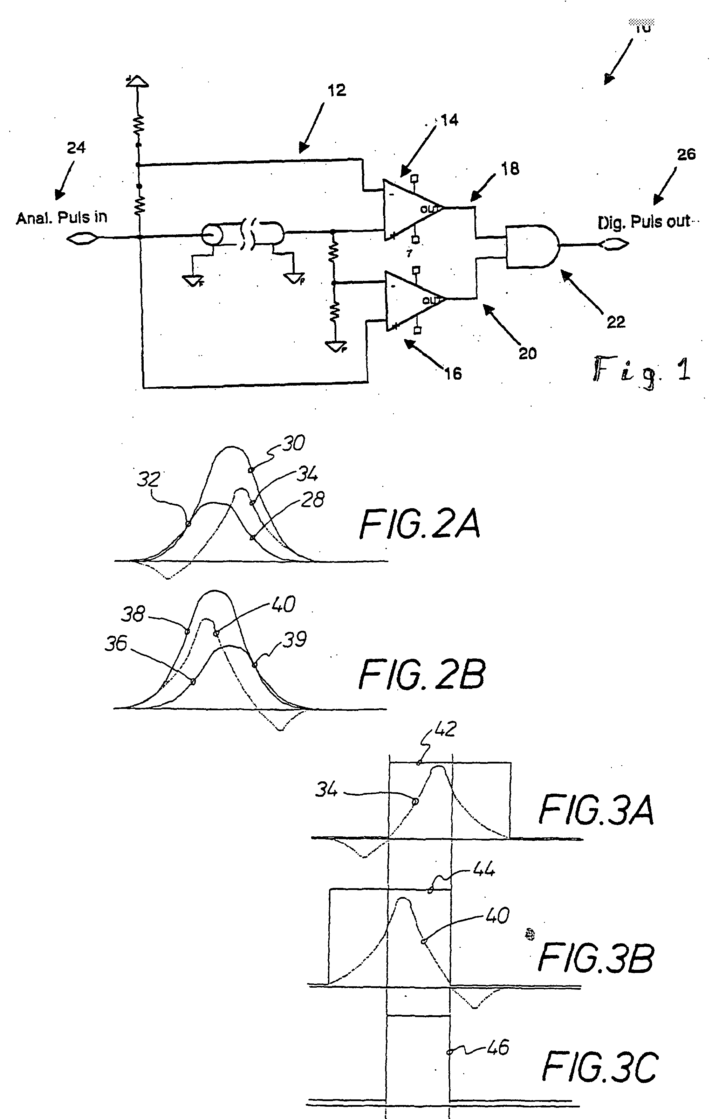

Bei der in Fig. 1 skizzierten Laser-Entfernungsmeßeinrichtung 10 für den optronischen Abstandszünder eines Projektils liefert ein Impulseingang 24 den in einem optronischen Empfänger aufbereiteten Echoimpulsverlauf an ein Verzögerungsglied 12, das einen dem Triggerpunkt auf der Anstiegsflanke zugeordneten, ersten Komparator 14 auf seinem nicht-invertierenden, direkten Eingang (+) ansteuert, und außerdem über einen Spannungsteiler als Dämpfungsnetzwerk einen zweiten, dem Triggerpunkt auf der Rückflanke zugeordneten Komparator 16 über dessen invertierenden Eingang (-). Der Impulseingang 24 führt außerdem, aber unter Umgehung des Verzögerungsgliedes 12, unmittelbar auf den direkten Eingang (+) des zweiten Komparators 16 und über einen Spannungsteiler als Dämpfungsnetzwerk auf den invertierenden Eingang (-) des Komparators 14. Die Ausgänge 18 und 20 der beiden Komparatoren 14 bzw. 16 sind auf die beiden Eingänge eines UND-Gatters 22 mit seinem Impulsausgang 26 geschaltet.

Der auf dem Impulseingang 24 erscheinende Echoimpulsverlauf 38 gelangt so als gedämpfter unverzögerter Impulsverlauf 28 an den invertierenden und als verzögerter unbedämpfter Impulsverlauf 30 auf den nicht invertierenden Eingang des Komparators 14, an dessen Eingängen deshalb der bipolare Differenzverlauf 34 wirkt. Dessen Polaritätswechsel (Nulldurchgang) bestimmt den von der Amplitude auf dem Impulseingang 24 weitestgehend unabhängigen Triggerzeitpunkt 32 auf dem Schnittpunkt der beiden einander zeitlich überlagerten ansteigenden Impulsflanken der Signalverläufe 30 und 28 gemäß Fig. 2A. Der Komparatorausgang 18 reagiert auf die Differenzspannung 34 mit dem Ausgangssignal 42. Dementsprechend zeigt Fig. 2B neben dem Echoimpulsverlauf 38 am nicht invertierenden Eingang des zweiten Komparators 16 den derart verzögerten und gedämpften Echoimpulsverlauf 36 am invertierenden Eingang des zweiten Komparators 16, daß sich daraus der bipolare Differenzverlauf 40 am Komparatoreingang ergibt, bei dem wieder der Polaritätswechsel (Nulldurchgang) den Triggerzeitpunkt 39 bestimmt, nun im Schnittpunkt der abfallenden Flanken der Signalverläufe 38 und 36. Es ergibt sich für den Ausgang 20 der Signalverlauf 44.

Dann und nur dann, wenn das Komparatorsignal 42 der Vorderflanke und das Komparatorsignal 44 der Rückflanke gleichzeitig das (hier: positive) Schaltpotential der UND-Logik des Gatters 22 führen, wird die UND-Bedingung erfüllt und deshalb währenddessen ein Rechteckimpuls 46 an den Gatterausgang 26 geliefert. Auf dessen steile Rückflanke kann das Zündsignal unproblematisch getriggert werden, wobei die Länge des Rechteckimpulses 46 für die Breite des Echoimpulsverlaufes 38 charakteristisch ist, also für die momentanen, maskierungsabhängigen Zielreflexionsgegebenheiten. Gemäß diesen im Zielanflug aktuell erfaßten Zielgegebenheiten kann deshalb im nachfolgenden Algorithmus die Initiierung des Gefechtskopfes zielabhängig und munitionsabhängig optimiert werden.

## Patentansprüche

1. Laserradar-Annäherungszünder mit Laser-Entfernungsmeßeinrichtung (10) und Masken-Diskrimination,
**dadurch gekennzeichnet,**
**daß** der von der Entfemungsmeßeinrichtung (10) auszulösende Zündimpuls auf die fallende Flanke des empfangenen Echoimpulsverlaufes (38) getriggert wird.

2. Annäherungszünder nach dem vorangehenden Anspruch,
**dadurch gekennzeichnet,**
**daß** der Zündimpuls getriggert wird, wenn der Differenzverlauf (40) aus unverzögertem Echoimpulsverlauf (38) und verzögertem bedämpftem Echoimpulsverlauf (36) einen Polaritätswechsel (Nulldurchgang) erfährt.

3. Annäherungszünder nach einem der vorangehenden Ansprüche,
**dadurch gekennzeichnet,**
**daß** die Zeitspanne zwischen den Triggerzeitpunkten auf der ansteigenden und auf der abfallenden Flanke des Echoimpulsverlaufes (38) erfaßt wird.

4. Annäherungszünder nach dem vorangehenden Anspruch,
**dadurch gekennzeichnet,**
**daß** die Zeitspanne erfaßt wird, während derer der Differenzverlauf (34;40) aus unverzögertem Echoimpulsverlauf (28;38) und verzögertem Echoimpulsverlauf (30;36) gleiches Potential aufweisen.

5. Annäherungszünder nach dem vorangehenden Anspruch,
**dadurch gekennzeichnet,**
**daß** der Echoimpulsverlauf (38) verzögert auf einen Eingang (+) eines Komparators (14) und zusätzlich bedämpft auf den invertierenden Eingang (-) eines anderen Komparators (16) geschaltet ist, und außerdem unverzögert aber bedämpft auf den invertierenden Eingang (-) des einen Komparators (14) und direkt auf den nicht-invertierenden Eingang (+) des anderen Komparators (16), deren Komparator-Ausgänge (18, 20) auf ein UND-Gatter (22) geschaltet sind, an dessen Ausgang (26) ein Rechteckimpuls (46) ausgegeben wird, dessen Breite für die Länge des Echoimpulsverlaufes (38) zwischen den Triggerpunkten (32, 39) auf der ansteigenden und auf der abfallenden Flanke des Echoimpulsverlaufes (38) repräsentativ ist.

## Claims

1. Laser radar proximity fuze with a laser range measurement device (10) and mask discrimination,
**characterized in that**
the firing impulse to be initiated by the range measurement device (10) is triggered on the falling flank of the received echo pulse waveform (38).

2. Proximity fuze according to the preceding claim,
**characterized in that**
the firing pulse is triggered when the difference waveform (40) between the undelayed echo pulse waveform (38) and the delayed damped echo pulse waveform (36) changes polarity (zero crossing).

3. Proximity fuze according to one of the preceding claims,
**characterized in that**
the time interval between the trigger times is recorded on the rising and on the falling flank of the echo pulse waveform (38).

4. Proximity fuze according to the preceding claim,
**characterized in that**
the time interval during which the difference profile (34; 40) between the undelayed echo pulse waveform (28; 38) and the delayed echo pulse waveform (30; 36) is at the same potential is recorded.

5. Proximity fuze according to the preceding claim,
**characterized in that**
the echo pulse waveform (38) is passed with a delay to one input (+) of a comparator (14), and with additional attenuation to the inverting input (-) of another comparator (16), and is also passed without a delay but attenuated to the inverting input (-) of the first comparator (14) and directly to the non-inverting input (+) of the other comparator (16), whose comparator outputs (18, 20) are connected to an AND gate (22) at whose output (26) a square-wave pulse (46) is emitted, whose width is representative of the length of the echo pulse waveform (38) between the trigger points (32, 39) on the rising and on the falling flank of the echo pulse waveform (38).

## Revendications

1. Fusée de proximité employant un radar à laser avec dispositif télémétrique (10) à laser et discrimination de camouflage,
**caractérisée en ce que** l'impulsion d'amorçage à déclencher par le dispositif télémétrique (10) à laser est déclenchée sur le flanc descendant de l'allure reçue (38) d'impulsions d'écho.

2. Fusée de proximité selon la revendication précédente, **caractérisée en ce que** l'impulsion d'amorçage est déclenchée lorsque l'allure différentielle (40) entre l'allure non retardée (38) d'impulsions d'écho et l'allure retardée et amortie (36) d'impulsions d'écho subit un changement de polarité (passage par zéro).

3. Fusée de proximité selon l'une quelconque des revendications précédentes, **caractérisée en ce qu'**on détecte l'intervalle de temps entre les instants de déclenchement sur le flanc ascendant et sur le flanc descendant de l'allure (38) d'impulsions d'écho.

4. Fusée de proximité selon la revendication précédente, **caractérisée en ce qu'**on détecte l'intervalle de temps pendant lequel les allures différentielles (34 ; 40) entre l'allure non retardée (28 ; 38) d'impulsions d'écho et l'allure retardée (30 ; 36) d'impulsions d'écho présentent le même potentiel.

5. Fusée de proximité selon la revendication précédente, **caractérisée en ce que** l'allure (38) d'impulsions d'écho est apportée retardée à une entrée (+) d'un comparateur (14) et retardée et amortie à l'entrée inverseuse (-) d'un autre comparateur (16), et en outre non retardée mais amortie à l'entrée inverseuse (-) du premier comparateur (14) et directement à l'entrée non inverseuse (+) de l'autre comparateur (16), les sorties (18, 20) de ces comparateurs étant branchées sur une porte ET (22), à la sortie (26) de laquelle est délivrée une impulsion carrée (46) dont la largeur est représentative de la longueur de l'allure (38) d'impulsions d'écho entre les points de déclenchement (32, 39) sur le flanc ascendant et sur le flanc descendant de l'allure (38) d'impulsions d'écho.
